Europäisches Patentamt

European Patent Office

Office européen des brevets

(11) Publication number: **0 041 346**
**A1**

(12) **EUROPEAN PATENT APPLICATION**

(21) Application number: **81302266.2**

(22) Date of filing: **21.05.81**

(51) Int. Cl.³: **A 23 L 1/33**
**A 23 J 1/20, A 23 L 1/325**
**A 23 L 1/333**

(30) Priority: **04.06.80 US 156294**

(43) Date of publication of application:
**09.12.81 Bulletin 81/49**

(84) Designated Contracting States:
**AT BE CH DE FR GB IT LI NL SE**

(71) Applicant: **STAUFFER CHEMICAL COMPANY**

**Westport Connecticut 06880(US)**

(72) Inventor: **Herz, Jack Leo**
**35 November Trail**
**Weston Connecticut 06883(US)**

(74) Representative: **Smith, Sydney et al,**
**Elkington and Fife High Holborn House 52/54 High Holborn**
**London WC1V 6SH(GB)**

(54) Fabricated shellfish products and production thereof.

(57) A fabricated shellfish product is prepared by shaping a blend of shellfish meat and a whey protein concentrate composition having more than 30% protein wherein at least 50% of the protein in the whey protein concentrate composition is whey protein which whey protein concentrate composition is capable of forming a gel at 15% solids within 30 minutes when heated at 85°C. The utilization of shrimps of a very small size as a food product is facilitated.

EP 0 041 346 A1

# Fabricated Shellfish Products and Production Thereof

The present invention relates to fabricated shellfish products, and to the production thereof.

Shellfish, which term is intended to cover crustacea, such as lobster, shrimp, spiny lobster, crab and crayfish; mollusks, such as clams and oysters as well as turtle are major food sources in many parts of the world. Shellfish are becoming expensive and scarce. Even as delicacies, the price is becoming prohibitive because supplies are dwindling and the expense in processing these foods is increasing.

In processing shellfish, there are always parts and pieces which are unacceptable for consumer products and must be relegated to a low cost market. Further, shellfish can be obtained in sizes too small for sale at top quality prices. It is known that tiny shrimp can be obtained in sizes ranging from about 444 to about 888 shrimp per kilograms.

The market is presently attempting to utilize these materials to prepare quality food products which command a higher price. For instance, imitation shrimp can be prepared by extruding comminuted shrimp and a binder such as texturized vegetable protein or alginate (cured with calcium into a gel). However, some of these products have deficiencies in flavor and texture. Further, fabricated shrimp must be made from an extrudable mass, and must be capable of machine handling in such treatments as boiling, breading and freezing as well as having freeze-thaw stability. Fabricated shrimp without a binder tends to disintegrate on boiling. Because of the high cost of shrimp, it would be desirable to prepare a fabricated shrimp product which had good taste, and texture and which upgrades low quality materials.

In accordance with the present invention, a fabricated shellfish product can be prepared by shaping a blend of a major proportion of shellfish meat and, as a total or partial binder therefor, a whey protein concentrate composition having more than 30% protein wherein at least 50% of the protein in the whey protein concentrate composition is whey protein and which composition is capable of forming a gel at 15% solids within 30 minutes after being heated at 85°C. A fabricated, handleable, good taste and texture and which can be consumed as a non-breaded or breaded product, boiled or fried, hot or cold, as desired.

The shellfish meats which can be used in preparing the products of the invention include meats from the crustacea, such as crab, lobster, shrimp and crayfish as well as from mollusks such as scallops, clams, oysters, muscles and abalone. Turtle and terrapin are also intended to be included within the definition of shellfish as used herein. It is also intended that the term "shellfish" include blends of shellfish meats in addition to the meat of one species.

The shellfish meats are used in a major proportion of the meat, the remainder having other meat products of sea origin such as fish, squid, etc. and the like. Preferably, the meat portion is substantially 100% shellfish meat.

The shellfish meat can be whole, pieces, comminuted and blends thereof. Lower quality materials such as extremely small shrimp (444-888 per kilogram) can be effectively processed in accordance with the invention. Scraps or pieces can also be processed to form upgraded products.

The shellfish meat can be raw or cooked though preferably in a shelled, raw, cleaned state. The meat can be frozen in individual pieces or blocks as is common in the industry. Methods for processing crustacea and mollusks as well as turtle, are disclosed in "Food Products Formulary", Vol. 1, "Meats, Poultry, Fish and Shellfish", by S. L. Komarik et al., Avi Publishing Co., 1974, the disclosure of which is hereby incorporated by reference.

The whey protein concentrate composition used in the invention contains at least 30% protein of which at least 50% must be whey protein. The remainder can be derived from other protein sources including dairy proteins, animal proteins and vegetable proteins.

The whey protein concentrate composition must be capable of forming a gel at 15% solids in water within about 30 minutes when heated to 85°C. The percent solids is based on the total solids added by the whey protein composition. A gel is formed when the mass becomes substantially non-pourable and capable of maintaining a shape. The whey protein concentrate composition must be able to form a gel at approximately the same pH as the shellfish system in which it is used. For effective gelation, the whey protein concentrate composition must be substantially soluble or swellable at the pH at which it is used.

The whey protein concentrate used in the invention can be derived from either acid whey or sweet whey though acid whey is a desired source. Acid whey is the byproduct obtained from the acid coagulation of milk protein by the use of a lactic acid producing bacteria or by the direct addition of a food grade acid. In either case, acidification generally proceeds until a pH of approximately 4.6 is reached. At this pH, casein becomes insolubilized and coagulates as cheese curd. The cheese commonly produced by this manner is called cottage cheese. The whey obtained is a byproduct from this method is called "acid" or "cottage cheese whey" or "casein whey".

The whey can also be derived from the production of cheddar cheese, which is commonly produced by the rennet coagulation of protein. This cheese whey is commonly called "sweet" or "cheddar cheese whey". Wheys from other cheeses which are either acid or sweet can also be used as the source of the whey protein.

The whey protein concentrate as used in the invention is more preferably derived from 100% acid cheese whey though less than 50% and preferably less than 20% by weight of other cheese wheys can be used.

Whey protein concentrate is defined as any whey product having more than 30% by weight protein (dry basis). Processes which can be utilized to prepare whey protein concentrates include electrodialysis which may be preceded or followed by partial lactose removal, (Stribley, R.C., Food Processing, Vol.

24, No. 1, page 49, 1963), Reverse Osmosis (Marshall, P. G. et al., Fractionation and Concentration of Whey by Reverse Osmosis, Food Technology 22(a) 696, 1968, Gel Filtration (U.S. Reissue Patent No. 27,806), and Ultrafiltration, Horton, B.S. et al., Food Technology, Vol.26,p.30,1972 and ion exchange. Chemical methods such as phosphate precipitation as described in Patent Nos. 2,388,624 and 4,043,990 as well as sodium lauryl sulfate precipitation as described in 4,029,825 and 4,058,510 can be used if the products prepared from these chemical precipitation methods otherwise correspond to the requisites for the whey protein concentrate.

It has been found that the most effective results have been obtained using an ultrafiltered acid whey protein concentrate containing at least about 40% whey protein. In a typical process, cottage cheese whey is neutralized to a pH of about 6.4 with 50% caustic. After storage, the pH is then adjusted to about 7.2 and any solids or precipitates are removed by centrifugal clarification. The clarified liquor, after pasteurization, is fed into an ultrafiltration membrane unit. The retentate is condensed and spray dried. Protein products of 35% by weight (dry basis) or more whey protein are efficiently prepared by this process. One of the more preferred products prepared by this process generally comprises from about 40% to about 60% whey protein based on Total Kjeldahl Nitrogen, 10-30% lactose, 3-15% ash and 0.1-4% fat. It is preferred to use a product in a dry form to avoid the need for refrigeration though a liquid whey protein concentrate can also be used.

It is particularly preferred to utilize, as the whey protein concentrate, a product which has been treated to reduce the thermal gelation temperature such as by the treatment of the protein with sulfite and preferably in accordance with the method disclosed in European Patent Application No. 80304120.1, the disclosure of which is incorporated herein by reference. The process as described in this copending application comprises cooling a heated alkaline protein containing solution having a total protein content of less than about 20% by weight of the solution wherein the pH is preferably within the range of from about 8 to about 10 from a temperature within the range of from about 50°C. to the gelation temperature of the protein to a temperature sufficiently low and within a sufficient amount of time after the solution reaches its maximum temperature level to prevent any substantial further change in the protein structure. The pH of the material is preferably reduced to neutral (6-8) simultaneously with, or subsequent to cooling.

A preferred form of the process described in this copending application comprises the steps of a) preparing a solution of whey protein in water at a temperature of less than about 30°C. at between 0.5% and 20% by weight total protein content wherein the pH of the solution is within the range of from about 8 to about 10, the total dissolved protein content being less than about 15% when determined at said pH; b) heating the alkaline solution to a temperature within the range of from about 50°C. to about 80°C.; c) cooling to a temperature below 30°C. and above 2°C. within at least 60 minutes after reaching the elevated temperature at a rate sufficient to prevent any further substantial change in the protein structure; and d) adjusting the pH below pH 8 and preferably within the range of from about 6 to 8. Cooling is generally initiated within one hour and preferably within 30 minutes after the temperature of the solution has reached its maximum level. Cooling is conducted at a rate sufficient to prevent any further substantial change in the protein and to avoid gelation of the protein containing solution.

The protein, which can be treated by the preferred process, is that protein which is substantially soluble at an alkaline pH of between 8 and 10. Substantial amounts of insoluble protein while generally having no adverse affect on the protein during processing, can affect the gel strength of later formed gels. It is preferable that the protein from the protein source be at least 50% by weight soluble and preferably at least 75% and more preferably at least 100% soluble at the alkaline pH of the process. The major protein (at least 50% by weight protein) for use in the aforementioned process is preferably any whey protein concentrate though the material can contain minor amounts of protein from other sources including dairy such as milk and whey byproducts and whey, vegetable such as soy, cottonseed, peanut and the like vegetables, soluble meat proteins such as those obtained from red meat, poultry and fish as well as egg and blood albumens. Preferably, the whey protein material which is treated is a whey protein concentrate provided by the processes previously discussed. The whey protein concentrate should contain at least 30% by weight (dry basis) and preferably from about 40% to about 60% protein based on Total Kjeldahl Nitrogen. Processing which substantially denatures the whey protein such as high heat, strong chemicals and electrodialysis under extreme conditions should be avoided. It has been found that the most effective results obtained using an ultrafiltered acid whey concentrate containing from about 40% to about 60% by weight (dry basis) protein. The process for obtaining such a product has been previously described as well as its composition.

The whey protein containing solution to be treated by the process disclosed in European Patent Application 80304120.1 does not require a minimum amount of protein for effective treatment. It is preferred not to use a whey protein solution having more than about 20% by weight protein in solution. The protein containing solution can be obtained by the use of an existing whey protein concentrate solution or by rehydrating a dried product in water. The pH is then adjusted to a range of from about 8 to about 10, preferably for whey proteins (dairy) from about 9 to about 10 with most effective results being achieved at about 9.5. Any food grade alkalizing agent such as sodium or potassium hydroxide and preferably sodium hydroxide can be used. Other methods of elevating the pH such as by the use of an anionic/cationic exchange resin can be used. Sufficient agitation is utilized to avoid localization of high pH.

The alkaline whey solution is then heated to a temperature within the range of from about 50°C. to about 80°C., the temperature being elevated as fast as possible without causing protein insolubilization. The maximum heating time is the gelation point of the protein. The heating time is preferably not over a maximum of about 1 hour and more preferably less than about 30 minutes, and most preferably less than about 15 minutes, depending on the temperature of processing. High temperature, short time pasteurization processing equipment can be effectively used for heating and cooling. After alkalization and heating, the product is cooled within a period of about 15 minutes to reduce the temperature below that at which further change in protein structure occurs and preferably to room temperature. Cooling must be initiated after the protein has been treated and before substantial gelation has occurred. The higher temperature achieved, the greater the rate required for the cooling. Subsequent to cooling, the pH is adjusted to a range of from about 6 to about 8 and preferably from about 6.5 to about 7.5 with any food grade acid. Sufficient agitation should be utilized to avoid localized conditions of acid build-up. The acid can be added during the cooling step if desired.

The neutralized product can be used as is, concentrated and/or dried. Effective material handling conditions should be observed to avoid spoilage and contamination of the product depending on its physical form.

The whey protein concentrate can be treated along with alternate protein sources. In general, processing conditions for the protein with the lowest activity point should be used. For instance, egg albumen and whey protein concentrate can be processed advantageously together. Blends of about 50% by weight whey protein concentrate and about 50% by weight (dry basis) egg albumen and preferably from about 75% to about 100% whey protein concentrate and from about 25% to about 0% egg albumen can be effectively processed together. The percentages are by weight based on the dry solids weight of the whey protein concentrate and the albumen. Processing times for blends are disclosed in European Patent Application 80304120.1

The product prepared by the process of EPA 80304120.1 or whey protein concentrates in general can be used in amounts of at least 50% by weight and more preferably at least 75% and most preferably 100% whey protein concentrate including modified whey protein concentrate with the remaining protein comprising blends of other proteins modified by the process of EPA 80304120.1 or non-modified proteins such as milk, alkali metal caseinates, unmodified whey proteins including dry whey, delactosed whey, delactosed demineralized whey, the dried permeate and delactosed permeate resulting from the ultrafiltration of whey, the precipitate prepared by neutralizing acid whey as disclosed in U.S. Patent No. 4,036,999 and the precipitate prepared by adding calcium ion to sweet whey followed by neutralization as disclosed in U.S. Patent No. 3,560,219 as well as the dried mother liquor remaining after separation of these precipitates, vegetable proteins such as soy proteins and soluble protein such as egg albumen and blood albumen whole egg and soy yolk. The use of these materials is dependent on the gel formation and hence the water solubility thereof. The soy protein should be treated to remove the soy taste or the amount of soy protein should be limited to avoid introducing a beany taste into the product.

These blends of protein can be made by dry blending or codrying the liquid blend. When using a modified whey protein concentrate, only a small amount of additional unmodified protein, i.e., less than 25% is recommended to avoid diluting the effects of the modified protein.

While the product can be dried effectively by itself, it is also contemplated to codry the products with drying agents and other functional ingredients, i.e., gums, starch, sugars, stabilizers, flavoring and bulking agents, emulsifiers and the like materials.

The whey protein concentrate composition can be dissolved in water and added to the meat of the shellfish alone or with other flavoring agents, such as salt, pepper, spices, herbs, flavor enhancers, stabilizers, preservatives or artificial shellfish flavors. The concentrate can also contain from about 0.3% to about 0.6% of a molecularly dehydrated noncyclic alkali metal (Na or K) phosphate having an alkali metal oxide to phosphorus pentoxide ratio of from about 0.9 to 1 to about 2 to 1 such as sodium tripolyphosphate (STP), sodium hexametaphosphate (SHMP), and tetrasodium pyrophosphate (TSPP), for improved cook yield in water holding. These ingredients can be added individually to the shellfish meat or in coblends as is appropriate.

The blend of the shellfish meat and the whey protein concentrate composition can be prepared by dry blending or liquid blending the ingredients under such conditions that an intimate mixture is obtained. For uniformity, it is preferred to accomplish the intimate blending in a meat chopper such as that referred to in the industry as a "silent cutter". Other equipment used in the industry for preparing comminuted meats can also be effectively used. The shellfish meat can be partially chopped prior to the addition of the protein and flavoring of other ingredients. If desired, the chopped material can also be emulsified.

The binder is used in an amount sufficient to effectively bind the shellfish meat. The binder can also be used in an amount above that needed for binding if it is desired to use the whey protein concentrate composition as a filler. Since the binder of the invention can be used as a partial binder, the term "amount sufficient to effectively bind" is intended to include that amount needed to bind in combination with all other binders in the system. The binder is preferably used in an amount of from 5% and above. For practical purposes, the upper limit of the binder is about 25%. Preferably, the upper limit is about 15% and most preferably the binder ranges from about 7.5% to about 12.5%. The percentage binder is on a dry protein basis based on the total weight of the shellfish meat and binder product before cooking. The optimum amount may vary for each type of shellfish and the degree of comminution. These optimum amounts can be easily determined by one skilled in the art. Binder amounts of about 5% are not as effective in shrimp as binder amounts above 7.5%.

The blends of shellfish meat and the binder can be shaped into products resembling the original shape of the shellfish or in convenient forms such as rolls, loaves, sausage links, patties and the like. Shaping can be accomplished using extruding techniques, molding techniques using pressure and non-pressure modes, other shaping containers such as cooking containers, casings and the like as is well known to a skilled artisan.

Shellfish of small size, i.e., less than about 2 centimeters in length, can also be formed into larger pieces without further comminuting using the binder of the invention. While the concept of binding pieces is also applicable to large shellfish, this is not practical since the larger shellfish such as large size shrimp command a high price which may be downgraded by treatment in accordance with the invention.

These products of the invention can be frozen directly, blanched, breaded or battered. The battered product is usually prefried to set the batter as is well known in the industry. ·

The products of the present invention can be conveyed in frozen form to the consumer or the industrial market. Frozen products can be sold to the food service industry breaded or unbreaded where the breading can be added just prior to final cook. The product can be sold frozen directly in the characteristic grey color of fresh shrimp or blanched to provide a pink color characteristic of cooked shrimp. The product of the invention can be utilized in its shaped form either hot (boiled or deep fat fried) or cold (in a shellfish salad). Chunks of shellfish prepared from smaller pieces can be used in preparing soups and stews as well as salads. Because of the binding capabilities of the whey protein concentrate, the fabricated product can be subjected to boiling without disintegration of the product. Such is not the case with a shellfish such as shrimp which is formed solely from comminuted shrimp meat. The products of the present invention can also be packaged in marinated sauce such as normally used with shrimp cocktail.

As used in the specification and claims herein, all percent protein are based on Total Kjeldahl Nitrogen (TKN) using the specific factor of 6.38 for dairy protein or other factors relevant to other protein systems.

The present invention will be illustrated in the examples which follow:

## EXAMPLE 1

The retentate from the ultrafiltration of acid whey containing about 50% protein on a dry solids basis was diluted with water from a total solids content of about 19% to a total solids content of about 18.4%. A sufficient amount of caustic was added to the diluted retentate to elevate the final pH from about 7 to about 9.2. The alkaline diluted retentate was heated in a pasteurizer to 78.9-80.6°C.). The hold time in the pasteurizer was 16-20 seconds. The heated product was cooled to 23.3°C. Phosphoric acid was added to the cooled product to lower the pH to about 7. The product was then spray dried.

A 15% solution of the modified whey protein concentrate as provided in this example when heated at 75°C. formed a gel within 30 minutes.

The modified whey protein concentrate product as used in the following examples had the following composition:

| Protein | 47.7% | |
|---|---|---|
| Carbohydrate | 35.2% | |
| Salt | 1.1% | |
| Fat | 0.6% | (by Roese Gottlieb Method) |
| Moisture | 8.9% | |
| pH | 6.9% | |

## EXAMPLE 2

An extruded shrimp product was prepared by chopping 88.5% by weight frozen Brazilian shrimp (444/666 per kg count), the percentage being by weight based on the weight of the frozen shrimp including ice glaze, and 0.5% by weight NaCl for approximately one minute in a silent cutter. There was then added 10% by weight modified whey protein concentrate as produced in Example 1 and 1% shrimp flavor (TIC ® Seafood flavoring). The mixture was chopped for approximately 3 minutes or until uniform. After emulsifying the blend, the blend was extruded through a Hercules ® Extruder (Model MC-1) into shrimp shapes of about 1.27 to 15.24 centimeters in diameter.

A portion of the extruded product was blast frozen at -34.4°C. Another portion was blanched in boiling water for 60 seconds and blast frozen. A third portion was battered and breaded, prefried to set batter and blast frozen.

The frozen portions prepared by blast freezing or blanching and blast freezing were boiled for 4 minutes. The frozen batter coated portion was deep fat fried for 4 minutes at 176.7°C.

Organoleptic evaluation showed that the boiled product was acceptable in color, texture and flavor. While the texture and flavor of the battered and breaded was acceptable, the overall appearance of the breading was unacceptable. The breading was dark in color and displayed large ruptures in the coating due to stream formed from entrapped water.

The products of the invention were compared with three commercially available products, i.e., Treasure Isle Shrimp Mates, Sea Pak Shrimp N' Batter and Singleton Shrimpees (the latter two with calcium alginate gel binders). The product of the invention was superior to the latter two. The Treasure Isle product has a texture closely resembling shrimp. The product of the invention has an acceptable texture though slightly spongy to rubbery. The moisture contents of the four products prior to cooking were determined to be:

TABLE I

|                            | % Moisture |
|----------------------------|------------|
| Product Example 2          | 75.3%      |
| Treasure Isle Shrimp Mates | 80.3%      |
| Sea Pak Shrimp N' Batter   | 66.4%      |
| Singleton Shrimpees        | 54.5%      |

Shrimp has moisture content of about 80-85%.

EXAMPLE 3

Three extruded shrimp products were formulated including Brazilian shrimp (frozen) with modified whey protein concentrate and Panamanian shrimp

(thawed about 88 8/kg) with and without modified whey protein concentrate. The following formulations were used:

TABLE II

| INGREDIENTS | FORMULATION % | | |
|---|---|---|---|
| | 3A | 3B | 3C |
| Shrimp, frozen (Brazilian) | 89.5 | | |
| Shrimp, thawed (Panamanian) | | 89.5 | 99.5 |
| Salt (NaCl) | 0.5 | 0.5 | 0.5 |
| Modified Whey Protein Concentrate | 10.0 | 10.0 | ---- |

The shrimp and salt were chopped for approximately one minute in a silent cutter. The remaining ingredients were added and the chopping was continued until the temperature of the mixture increased to 4.4°C. The TIC ® Seafood flavoring was omitted to rid the product of a slight off-flavor. Emulsification on a Hercules ® Extruder (Model MC-1) into shrimp shapes of less than 1.27 centimeters in diameter. All product was blast frozen at -34.4°C.

One frozen portion of the frozen product was boiled for 3 minutes. Another frozen portion was dipped into a batter and deep fat fried for 3.0 minutes at 176.7°C. The exploding effect was not observed in the deep fat fried product presumedly due to the smaller size (see Example 2).

Organoleptic evaluation of the products showed that the color, texture and flavor of products prepared with modified whey protein concentrate were acceptable while the extruded Panamanian product without modified whey protein concentrate was unacceptable. The extruded Panamanian shrimp product without modified whey protein concentrate, whether boiled or deep fat fried, were unacceptable in color with a moderately dry texture. The flavor was moderately objectionable due to the strong characteristic flavor associated with Panamanian shrimp.

The extruded Panamanian shrimp product with modified whey protein concentrate showed a significant improvement in color, texture and flavor of the product over the extruded product without modified whey protein concentrate. The color was lighter, the texture was moist and closely resembled that of shrimp, and the flavor was milder. It appeared that modified whey protein concentrate functioned to mask the strong characteristic flavor of Panamanian shrimp, to dilute the dark color, and minimized moisture loss on cooking.

The moisture contents of the uncooked products of this example were determined to be:

TABLE III

| PRODUCT | MOISTURE % |
|---|---|
| Example 3A Brazilian Shrimp with Product of Example 1 | 77.6% |
| Example 3B Panamanian Shrimp with Product of Example 1 | 77.4% |
| Example 3C Panamanian Shrimp without Product of Example 1 | 84.8% |

These data show that whey protein concentrate can be effectively used in preparing extruded shellfish products. The preferred whey protein concentrate with lowered gelation temperature functioned in an extruded shrimp product as a binder, to improve and/or enhance the organoleptic characteristics of the product and as a gelling agent. The unique characteristics of the whey protein concentrate with lowered gelation temperature allows extruded products to be marketed frozen uncooked, frozen boiled or frozen breaded.

Claims:

1. A fabricated shellfish product comprising a meat portion wherein a major proportion thereof is shellfish meat and as a binder therefor a whey protein containing composition comprising from 75% to 100% by weight of a whey protein concentrate having more than 30% by weight whey protein on a dry solids basis and from 25% to 0% of another protein containing material, wherein said whey protein concentrate in said composition is substantially soluble or swellable at the pH of use and which is prepared by ultrafiltering whey at a pH above 6.4, said composition being further characterised by the requirement that a mixture of 15% solids of said composition in water is capable of forming a gel at 85°C within 30 minutes.

2. A product as claimed in claim 1 characterised in that the shellfish meat is comminuted.

3. A product as claimed in claim 1 or claim 2 characterised in that the shellfish meat is shrimp.

4. A product as claimed in any of claims 1 to 3 characterised in that the binder is present in the product prior to cooking in an amount ranging from 5% to 25%, by weight.

5. A product as claimed in any of claims 1 to 4 characterised in that the whey protein concentrate has from 40% to 60% by weight whey protein on a dry solids basis.

6. A product as claimed in any of claims 1 to 5 characterised in that the whey protein concentrate has been post treated to prepare a whey protein concentrate characterised by a lowered gelation temperature by a process comprising:

a)      adjusting the pH of an aqueous solution of a whey protein concentrate having a temperature of less than 30°C to a pH within the range of from about 8 to 10, the total dissolved protein content being less than 15% when determined at said pH;

b)      heating the solution of step a) to an elevated temperature within the range of from 50°C and 80°C;

c)      cooling said heated solution to a temperature within the range of from 30°C to 2°C within 30 minutes after the said solution reaches its maximum temperature level, said cooling being conducted at a rate sufficient to prevent gelation of the whey protein containing solution, said post treated material being capable of forming a gel at 15% solids in water at 75°C within 30 minutes.

7.      A product as claimed in claim 6 characterised in that the composition is used in an amount ranging from 5% to 25% by weight based on the total weight of the uncooked product.

8.      A product as claimed in any of claims 1 to 8 characterised in that the product is extruded into the shape of a shrimp.

9.      A product as claimed in any of claims 1 to 8 in which the meat portion is 100% shellfish.

10.      A method for preparing a fabricated shellfish product as claimed in any of claims 1 to 9 characterised in that one prepares a blend of the meat portion and of the binder to produce the product.

11.      A method as claimed in claim 10 characterised in that one comminutes the shellfish meat.

12.    A method as claimed in claim 10 or claim 11 characterised in that one extrudes the blend in the form of a shrimp.

0041346

# EUROPEAN SEARCH REPORT

Application number

EP 81 30 2266.2

## DOCUMENTS CONSIDERED TO BE RELEVANT

| Category | Citation of document with indication, where appropriate, of relevant passages | Relevant to claim |
|---|---|---|
| | DE - A1 - 2 508 196 (PEDIGREE PET-FOODS LTD.) <br> * claim 4, page 2, paragraph 3; page 5, paragraph 2; page 10, example 5 * <br> & US - A - 4 168 322 <br> --- | 1,4 |
| D | US - A - 4 043 990 (N. MELACHOURIS) <br> --- | |
| D,E | EP - A1 - 0 029 370 (STAUFFER CHEMICAL CO.) <br> --- | |
| A | CA - A - 996 406 (ONG) <br> --- | |
| A | CA - A - 953 971 (ONG) <br> --- | |
| A,P | GB - A - 2 035 330 (STE DES PRODUITS NESTLE S.A.) <br> ---- | |

### CLASSIFICATION OF THE APPLICATION (Int. Cl.³)

A 23 L 1/33
A 23 J 1/20
A 23 L 1/325
A 23 L 1/333

### TECHNICAL FIELDS SEARCHED (Int. Cl.³)

A 23 J 1/00
A 23 J 3/00
A 23 L 1/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 13-07-1981 | SCHULTZE |

EPO Form 1503.1  06.78